# EUROPÄISCHE PATENTSCHRIFT

(11) **EP 1 344 685 B1**
(45) Veröffentlichungstag und Bekanntmachung des Hinweises auf die Patenterteilung: **06.04.2005**
(21) Anmeldenummer: 03003817.8
(22) Anmeldetag: 20.02.2003
(51) Int. Cl.: B60R 1/04, B60R 1/12

(54) **Sensor-Spiegel-Anordnung an einer Windschutzscheibe**
Mirror sensor fixed on a windscreen
Mirroir-capteur fixé à une pare-brise

(30) Priorität: 15.03.2002 DE 10211443
(43) Veröffentlichungstag der Anmeldung: 17.09.2003
(73) Patentinhaber: DaimlerChrysler AG, 70567 Stuttgart (DE)
(72) Erfinder: Krug, Martin, 76189 Karlsruhe (DE)

(56) Entgegenhaltungen:
- DE-A- 3 700 098
- DE-A- 19 846 969
- DE-U- 29 805 142
- US-B1- 6 299 319

## Beschreibung

Die vorliegende Erfindung betrifft eine Sensor-Spiegel-Anordnung an einer Windschutzscheibe eines Kraftfahrzeugs.

Aus der DE 198 46 969 A1 ist es bekannt, an einer Windschutzscheibe eines Kraftfahrzeugs einen Regensensor anzubringen, mit dessen Hilfe eine Scheibenwischeinrichtung gesteuert werden kann. Um mit Hilfe des Regensensors die Wischertätigkeit bedarfsabhängig steuern zu können, ist es erforderlich, den Regensensor an der Windschutzscheibe innerhalb eines Wischfeldes der Scheibenwischeinrichtung anzuordnen. Dabei sind gesetzliche Vorgaben zu berücksichtigen, die es verbieten, innerhalb eines vorgeschriebehen freien Sichtfeldes der Windschutzscheibe ein Sichthindernis zu positionieren. Dementsprechend kann ein derartiger Regensensor z.B. in einem oberen Randbereich der Windschutzscheibe angeordnet werden, der sich zwischen dem freien Sichtfeld und einem Fahrzeugdach befindet.

Aus der DE 37 00 098 C2 ist ein Innenrückblickspiegel bekannt, der mit Hilfe einer Spiegelhalterung an der Windschutzscheibe befestigt ist. Auch für die Anbringung dieses Innenrückblickspiegels müssen gesetzliche Bestimmungen berücksichtigt werden. Einerseits gilt auch hier, daß die Spiegelhalterung nicht im freien Sichtfeld angeordnet werden darf. Darüber hinaus muß der Innenrückblickspiegel so im Fahrzeuginnenraum angeordnet werden, daß er eine vorgeschriebene Blickwinkelgeometrie aufweist, die sicherstellt, daß ein normierter Standard-Fahrzeugführer durch den Innenrückblickspiegel ein vorgeschriebenes Mindestblickfeld überwachen kann.

Für die Befestigung des Innenrückblickspiegels an der Windschutzscheibe wird üblicherweise eine Spiegelhalterung verwendet, die unabhängig vom Innenrückblickspiegel an der Windschutzscheibe, insbesondere mittels einer Verklebung, befestigt ist. An dieser Spiegelhalterung ist ein erstes Befestigungsteil ausgebildet, das beim bekannten Innenrückblickspiegel durch zwei an einander gegenüberliegenden Seiten seitlich von einem Grundkörper abstehende Leisten gebildet ist, wobei zwischen diesen Leisten und der Windschutzscheibenfläche ein Hinterschnitt ausgebildet ist. Ein Spiegelfuß des Innenrückblickspiegels besitzt ein zweites Befestigungsteil, das komplementär zum ersten Befestigungsteil ausgebildet ist und mit diesem zur Befestigung des Innenrückblickspiegels an der Spiegelhalterung zusammenwirkt. Beim bekannten Innenrückblickspiegel ist das zweite Befestigungsteil durch eine Blattfeder gebildet, die mit nach innen abgewinkelten Endabschnitten die Leisten hintergreift. Dabei ist die Spiegelhalterung so dimensioniert daß der daran befestigte Spiegelfuß einen Mindestabstand von der Oberfläche der Windschutzscheibe besitzt. Dieser Mindestabstand gewährleistet, daß sich der Spiegelfuß bei einer Störung, z.B. im Crash-Fall, von der Spiegelhalterung lösen kann, um Verletzungen zu vermeiden. Des weiteren ist dieser Mindestabstand für eine bequeme Montage des Spiegelfußes an der Spiegelhalterung erforderlich.

Aus unterschiedlichen Gründen kann es erwünscht sein, den Sensor und den Innenrückblickspiegel möglichst nahe beieinander an der Windschutzscheibe anzuordnen. Aus der US 6 299 319 B1 ist eine Sensor-Spiegel-Anordnung an einer Windschutzscheibe eines Kraftfahrzeugs bekannt in welcher ein Regensensor in der auf der Scheibe befestigten Spiegelhalterung integriert ist. Des weiteren besteht der Wunsch, Fahrzeuge, die serienmäßig mit einem Innenrückblickspiegel ausgestattet sind, optional auch mit einem Sensor, insbesondere Licht- und/oder Regensensor, auszustatten. Bei bestimmten Fahrzeugen ist zur Erzielung der vorbestimmten Blickwinkelgeometrie die Spiegelhalterung im Wischfeld der Scheibenwischeinrichtung angeordnet. Die Anbringung eines Sensors kann dann problematisch sein, wenn der Sensor bei einer Anbringung unterhalb der serienmäßigen Position der Spiegelhalterung in das freie Sichtfeld gelangt und bei einer Anbringung oberhalb der serienmäßigen Anordnung der Spiegelhalterung aus dem Wischfeld herauskommt und eine Positionierung des Sensors neben der Spiegelhalterung unerwünscht ist. Ein Verschieben des serienmäßigen Innenrückblickspiegels entlang der Windschutzscheibe nach oben, um dann den Sensor unterhalb des Innenrückblickspiegels im Wischfeld anbringen zu können, ist nicht zielführend, da der Innenrückblickspiegel dann in der neuen Raumlage die vorgeschriebene Blickwinkelgeometrie nicht mehr besitzt.

Die vorliegende Erfindung beschäftigt sich mit dem Problem, für eine Sensor-Spiegel-Anordnung der eingangs genannten Art eine verbesserte Ausführungsform anzugeben, die insbesondere eine bessere Ausnutzung des vorhandenen Anbauraums ermöglicht.

Dieses Problem wird erfindungsgemäß durch die Gegenstände der unabhängigen Ansprüche gelöst. Vorteilhafte Ausführungsformen sind Gegenstand der abhängigen Ansprüche.

Die Erfindung beruht auf dem allgemeinen Gedanken, bei einer Verschiebung der Spiegelhalterung entlang der Windschutzscheibe nach oben deren erstes Befestigungsteil mittels eines Sockels von der Windschutzscheibe zu beabstanden. Hierdurch ist es möglich, bei einem Innenrückblickspiegel, der bei seiner Verschiebung nach oben die vorgeschriebene Blickwinkelgeometrie verläßt, die Raumlage so zu korrigieren, daß der Innenrückblickspiegel trotz seiner Verschiebung nach oben die erforderliche Blickwinkelgeometrie wieder besitzt. Hierdurch ist es bei einem begrenzten Raumangebot möglich, den Sensor unterhalb der Spiegelhalterung an der Windschutzscheibe anzuordnen. Da durch diese Maßnahme ein herkömmlicher, serienmäßiger Innenrückblickspiegel verwendet werden kann, ist die Umstellung von einer Ausstattungsvariante ohne Sensor zu einer Ausstattungsvariante mit Sensor besonders preiswert realisierbar. Insbesondere ist eine Neukonstruktion des Innenrückblickspiegels nicht erforderlich.

Weitere wichtige Merkmale und Vorteile der Erfindung ergeben sich aus den Unteransprüchen, aus den Zeichnungen und aus der zugehörigen Figurenbeschreibung anhand der Zeichnungen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: einen stark vereinfachten Längsschnitt durch eine erfindungsgemäße Sensor-Spiegel-Anordnung,
- Fig. 2: einen weiter vereinfachten Querschnitt durch eine Spiegelhalterung nach dem Stand der Technik,
- Fig. 3: einen Querschnitt wie in Fig. 2, jedoch nach der Erfindung, und
- Fig. 4: eine perspektivische Ansicht auf eine Kombihalterung nach der Erfindung.

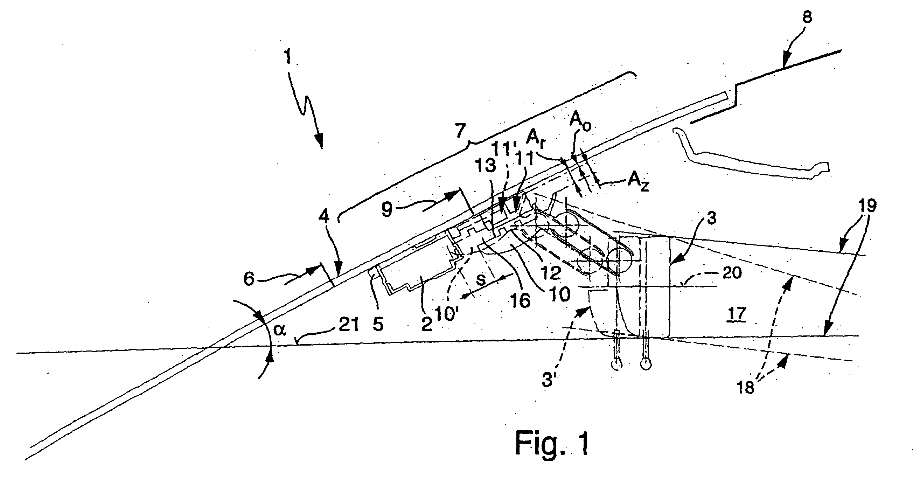

Entsprechend Fig. 1 umfaßt eine erfindungsgemäße Sensor-Spiegel-Anordnung 1 wenigstens einen optischen Sensor 2 und einen Innenrückblickspiegel 3. Beim Sensor 2 kann es sich beispielsweise um einen Regen- und/oder Lichtsensor handeln, der zur Erfüllung seiner Funktion an einer Windschutzscheibe 4 eines Fahrzeugs, insbesondere eines Personenkraftwagens, angebracht ist. Zu diesem Zweck umfaßt die Anordnung 1 eine Sensorhalterung 5, die zur Positionierung und Fixierung des Sensors 2 dient.

Die Windschutzscheibe 4 besitzt ein Sichtfeld 6, dessen obere Grenze in Fig. 1 durch einen Pfeil markiert ist. In diesem Sichtfeld 6 darf kein die Sicht behinderndes Hindernis angeordnet werden; insbesondere dürfen Sensor 2 und Innenrückblickspiegel 3 nicht innerhalb dieses Sichtfeldes 6 an der Windschutzscheibe 4 befestigt werden. Oberhalb an dieses Sichtfeld 6 schließt sich ein oberer Randbereich 7 an, der in Fig. 1 durch eine geschweifte Klammer gekennzeichnet ist und sich bis zu einem Fahrzeugdach 8 erstreckt. Eine der Windschutzscheibe 4 zugeordnete, nicht gezeigte Scheibenwischeinrichtung besitzt einen Wischbereich 9, dessen obere Grenze im Schnitt der Fig. 1 mit einem Pfeil markiert ist. Dieser Wischbereich 9 erstreckt sich somit über das Sichtfeld 6 hinaus bis in den oberen Randbereich 7 hinein.

Damit der Sensor 2 seine Funktion erfüllen kann, muß er innerhalb des Wischfelds 9 an der Windschutzscheibe 4 positioniert sein.

Der Innenrückblickspiegel 3 besitzt einen Spiegelfuß 10, der mit einer Spiegelhalterung 11 verbunden ist. Diese Spiegelhalterung 11 ist ihrerseits an der Windschutzscheibe 4 befestigt, wobei die Spiegelhalterung 11 ebenfalls im oberen Randbereich 7, jedoch gegenüber dem Sensor 2, entlang der Windschutzscheibe 4 nach oben versetzt angeordnet ist. Zur Befestigung des Innenrückblickspiegels 3 weist die Spiegelhalterung 11 ein erstes Befestigungsteil 12 auf, das mit einem komplementären zweiten Befestigungsteil 13, das am Spiegelfuß 10 ausgebildet ist, zusammenwirkt.

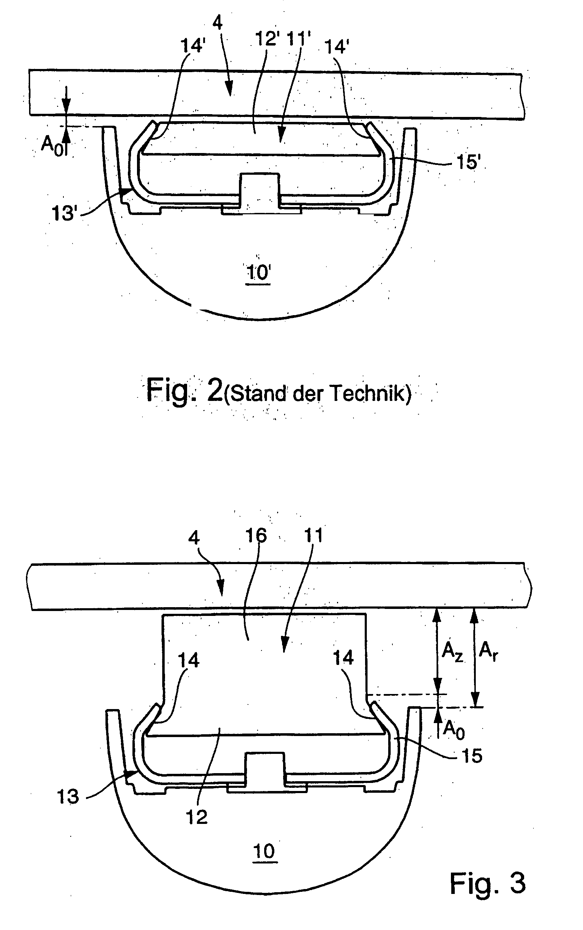

Der erfindungsgemäße Aufbau der Spiegelhalterung 11 wird im folgenden anhand der Fig. 1 bis 3 näher erläutert. In Fig. 2 ist eine Spiegelhalterung 11' dargestellt, wie sie aus dem Stand der Technik bekannt ist, vgl. z.B. die DE 37 00 098 C2. Das erste Befestigungsteil 12' besitzt seitliche Flanken 14', die zur Windschutzscheibe 4 hin einen Hinterschnitt bilden. Das zweite Befestigungsteil 13' besitzt eine Federklammer 15', welche die Flanken 14' seitlich umgreift. Mit Hilfe dieser Befestigungsteile 12' und 13' ist der Spiegelfuß 10' so an der Spiegelhalterung 11' fixiert, daß sich der Innenrückblickspiegel bei einer unzulässig hohen Krafteinwirkung, z.B. im Crash-Fall, von der Spiegelhalterung 11' lösen kann, um gravierende Verletzungen der Fahrzeuginsassen zu vermeiden. Um diese Funktion gewährleisten zu können, besitzt der Spiegelfuß 10' einen Mindestabstand A₀ zur Windschutzscheibe 4.

Gemäß Fig. 3 besitzt die erfindungsgemäße Spiegelhalterung 11 grundsätzlich dasselbe erste Befestigungsteil 12 und ist ebenfalls mit den beiden Flanken 14 ausgestattet, an denen die bekannte Federklammer 15 angreift. Im Unterschied zu der Spiegelhalterung 11' gemäß Fig. 2 besitzt die erfindungsgemäße Spiegelhalterung 11 gemäß Fig. 3 einen Sockel 16, der an der Windschutzscheibe 4 befestigt ist und der an seiner von der Windschutzscheibe 4 abgewandten Seite das erste Befestigungsteil 12 aufweist. Im Unterschied zum Stand der Technik gemäß Fig. 2 ist somit das erste Befestigungsteil 12 nicht direkt, sondern indirekt über den Sockel 16 an der Windschutzscheibe 4, insbesondere durch eine Verklebung, befestigt. Durch die Dimensionierung dieses Sockels 16 quer zur Windschutzscheibe 4 ergibt sich für den Spiegelfuß 10 ein zusätzlicher Abstand A_{z}, der sich zum Mindestabstand A₀ hinzuaddiert. Dementsprechend ergibt sich bei der Erfindung für den Spiegelfuß 10 ein resultierender Abstand Aᵣ zwischen Spiegelfuß 10 und Windschutzscheibe 4, der hier deutlich größer ist als der Mindestabstand A₀ gemäß dem Stand der Technik aus Fig. 2.

Dieser Zusammenhang ist auch in Fig. 1 wiedergegeben, wobei dort mit durchgezogenen Linien die erfindungsgemäße Positionierung des Innenrückblickspiegels 3 dargestellt ist, während eine herkömmliche Anordnung mit unterbrochenen Linien dargestellt ist.

Die Erfindung geht z.B. von einem Fahrzeug aus, das in einer Standardausführung ohne den Sensor 2 geliefert wird. Für diesen Standardfall ist der serienmäßige Innenrückblickspiegel 3' konzipiert. Mit Hilfe einer herkömmlichen Spiegelhalterung 11' gemäß Fig. 2 wird der Innenrückblickspiegel 3 so an der' Windschutzscheibe angeordnet, daß er im Fahrzeuginnenraum 17 eine Raumlage einnimmt, in welcher der Innenrückblickspiegel 3' eine vorgeschriebene Blickwinkelgeometrie aufweist. Diese Blickwinkelgeometrie ist in Fig. 1 durch zwei extreme Sehfelder 18 und 19 vorgegeben, die jeweils eine extreme Augenhöhenposition charakterisieren, in denen durch den Innenrückblickspiegel 3,3' eine vorgeschriebehe Mindestsicht nach hinten gewährleistet sein muß. In dieser Ausgangsposition befindet sich die Spiegelhalterung 11' zumindest teilweise im Wischfeld 9. Der Spiegelfuß 10' besitzt in dieser Ausgangsposition den Mindestabstand A₀ von der .Windschutzscheibe 4.

Für eine Ausstattungsvariante soll nun das Fahrzeug mit dem Sensor 2 ausgestattet werden. Dazu muß die Position der Spiegelhalterung 11 entlang der Windschutzscheibe 4 nach oben verschoben werden, um innerhalb des Wischfeldes 9 hinreichend Platz für die Unterbringung des Sensors 2 zu schaffen, so daß dieser auf keinen Fall in das Sichtfeld 6 hineinragt. Durch diese.Verschiebung der Spiegelhalterung 11 verändert sich die Raumlage des Innenrückblickspiegels 3,3' derart, daß der Innenrückblickspiegel 3,3' die vorgeschriebene Blickfeldgeometrie nicht mehr besitzt. Hier kommt nun die Erfindung zum Tragen, indem die erfindungsgemäße Spiegelhalterung 11 verwendet wird, die mit ihrem Sockel 16 den Zusatzabstand A_{z} für den Spiegelfuß 10 ausbildet. Durch eine geeignete Dimensionierung des Sockels 16 kann dadurch die Raumlage des Innenrückblickspiegels 3 so weit korrigiert werden, daß der Innenrückblickspiegel 3 wieder die vorgeschriebenen Blickfeldgeometrie besitzt. Der besondere Charme der erfindungsgemäßen Anordnung 1 liegt darin, daß für die beiden geschilderten Ausstattungsvarianten derselbe Innenrückblickspiegel 3,3' verwendet werden kann.

Wie aus Fig. 1 besonders deutlich hervorgeht, ist die Dimensionierung des Sockels 16 so gewählt, daß der Innenrückblickspiegel 3 in der Endposition, die sich bei der Ausstattungsvariante mit Sensor 2 ergibt, etwa auf dem gleichen Niveau 20 im Fahrzeuginnenraum 17 angeordnet ist, wie in der Ausgangsposition, in der das Fahrzeug den Sensor 2 nicht besitzt.

Die Dimensionierung des Sockels 16 erfolgt zweckmäßig so, daß der in der Endposition erzielte Zusatzabstand A_{z} etwa einer Strecke S multipliziert mit dem Tangens eines Neigungswinkels α entspricht. Die Strecke S ist dabei der Wert, um den die Spiegelhalterung 11 in der Endposition gegenüber der Spiegelhalterung 11' in der Ausgangsposition entlang der Windschutzscheibe 4 nach oben versetzt ist. Der Winkel α ist dabei der Neigungswinkel der Windschutzscheibe 4 gegenüber einer Horizohtalebene 21.

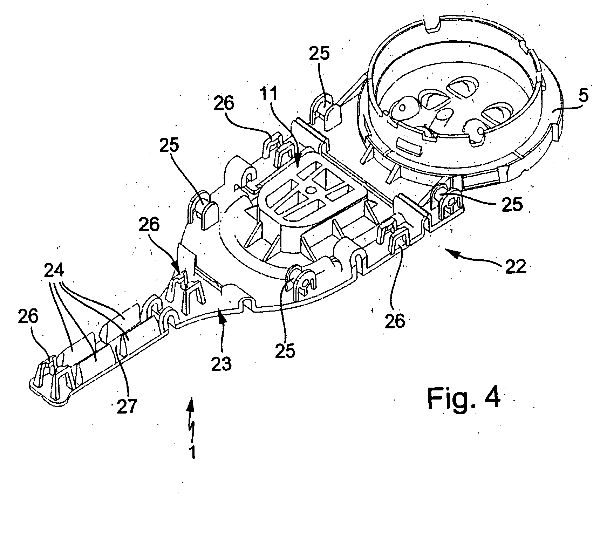

Entsprechend Fig. 4 können bei einer bevorzugten Ausführungsform der erfindungsgemäßen Anordnung 1 die Sensorhalterung 5 und die Spiegelhalterung 11 zu einer einteiligen oder einstückigen Kombihalterung 22 zusammengefaßt sein. Hierdurch läßt sich die Montage der beiden Halterungen 5,11 an der Windschutzscheibe 4 erheblich vereinfachen. Gleichzeitig wird stets eine vorbestimmte Relativlage zwischen Sensorhalterung 5 und Spiegelhalterung 11 relativ genau gewährleistet.

Bei der in Fig. 4 gezeigten Ausführungsform ist in die Kombihalterung 22 außerdem eine Abdeckhalterung 23 integriert, mit deren Hilfe eine einteilige oder mehrteilige, hier nicht gezeigte Abdeckung an der Kombihalterung 22 befestigbar ist. Diese Abdeckung kann als Sichtschutz für die darunter verborgenenen Komponenten dienen. Zur Fixierung der Abdeckung besitzt die Abdeckungshalterung 23 Rasthaken 24, an denen die Abdeckung bzw. ein Abdeckungsteil anclipsbar ist. Des weiteren sind hier Haltestege 25 vorgesehen, an denen die Abdeckung bzw. ein anderes Abdeckungsteil mit entsprechenden Klammern, z.B. Ω-Clips, anclipsbar ist. Darüber hinaus sind Kabelhalter 26 vorgesehen, welche die Verlegung von Kabeln und Leitungen an der Kombihalterung 22 erleichtern. Die Rasthaken 24 sind dabei so angeordnet, daß sie zwischen sich einen Kabelkanal 27 ausbilden, in dem die Kabel und Leitungen von den Komponenten der Anordnung 1 zum Fahrzeugdach 8 geführt werden.

In Verbindung mit der in Fig. 4 gezeigten Kombihalterung 22 bildet die erfindungsgemäße Anordnung 1 eine weitgehend vormontierbare Einheit, die besonders einfach an der Windschutzscheibe 4 montiert werden kann. Insbesondere bietet die Kombihalterung 22 an ihrer vom Betrachter abgewandten Unterseite eine relativ große Oberfläche, die zur Erzielung einer dauerhaften, sicheren Verklebung zur Verfügung steht.

## Patentansprüche

1. Sensor-Spiegel-Anordnung (1) an einer Windschutzscheibe (4) eines Kraftfahrzeugs,
- mit einem optischen Sensor (2), der mittels einer Sensorhalterung (5) in einen zwischen einem freien Sichtfeld (6) der Windschutzscheibe (4) und einem Fahrzeugdach (8) angeordneten oberen Randbereich (7) der Windschutzscheibe (4) innerhalb eines Wischfeldes (9) einer Scheibenwischeinrichtung an der Windschutzscheibe (4) befestigt ist,
- mit einem Innenrückblickspiegel (3), der mittels einer Spiegelhalterung (11) im oberen Randbereich (7) zwischen dem Sensor (2) und dem Fahrzeugdach (8) an der Windschutzscheibe (4) befestigt ist,
- wobei die Spiegelhalterung (11) ein erstes Befestigungsteil (12) aufweist, das zum Befestigen des Innenrückblickspiegels (3) mit einem komplementären zweiten Befestigungsteil (13) zusammenwirkt, das an einem Spiegelfuß (10) des Innenrückblickspiegels (3) ausgebildet ist,'
- wobei die Spiegelhalterung (11) einen an der Windschutzscheibe (4) befestigten Sockel (16) aufweist, an dessen von der Windschutzscheibe (4) abgewandten Seite das erste Befestigungsteil (12) ausgebildet ist und der so dimensioniert ist, daß der an der Spiegelhalterung (11) befestigte Spiegelfuß (10) einen vorbestimmten Abstand (Aᵣ) von der Windschutzscheibe (4) besitzt, der größer ist als ein für die Montage und/oder Funktion des Spiegelfußes (10) gegebenenfalls erforderlicher Mindestabstand (A₀).

2. Anordnung (1) nach Anspruch 1,
**dadurch gekennzeichnet,**
**daß** der Abstand (Aᵣ) zwischen Windschutzscheibe (4) und Spiegelfuß (10) so gewählt ist, daß der Innenrückblickspiegel (3) im Fahrzeuginnenraum (17) eine Raumlage einnimmt, in der er eine vorgeschriebene Blickwinkelgeometrie aufweist.

3. Anordnung (1) nach Anspruch 1 oder 2,
**dadurch gekennzeichnet,**
- daß der Abstand des Spiegelfußes (10) von der Windschutzscheibe (4) einem resultierenden Abstand (Aᵣ) entspricht, der durch die Summe aus einem Mindestabstand (A₀) und einem Zusatzabstand (A_{z}) gebildet ist,
- wobei der Mindestabstand (A₀) dann vorliegt, wenn ein vorgegebener Innenrückblickspiegel (3) mittels einer Spiegelhalterung (11'), die ohne Sockel (16) ausgestattet ist, in einer Ausgangsposition an der Windschutzscheibe befestigt ist, in welcher der Innenrückblickspiegel (3) im Fahrzeuginnehraum (17) eine Raumlage einnimmt, in der er eine vorgeschriebene Blickwinkelgeometrie aufweist,
- wobei der resultierende Abstand (Aᵣ) dann vorliegt, wenn der vorgegebene Innenrückblickspiegel (3) mittels der mit dem Sockel (16) ausgestatteten Spiegelhalterung (11) in einer Endposition an der Windschutzscheibe (4) befestigt ist, die gegenüber der Ausgangsposition um eine Strecke (S) entlang der Windschutzscheibe (4) zum Fahrzeugdach (8) hin versetzt ist und in welcher der Innenrückblickspiegel (3) im Fahrzeuginnenraum (17) eine Raumlage einnimmt, in der er wieder die vorgeschriebene Blickwinkelgeometrie aufweist.

4. Anordnung (1) nach Anspruch 3,
**dadurch gekennzeichnet,**
**daß** daß der Innenrückblickspiegel (3) in der Endposition im Fahrzeuginnenraum (17) etwa auf dem gleichen Niveau (20) angeordnet ist wie in der Ausgangsposition.

5. Anordnung (1) nach Anspruch 3 oder 4,
**dadurch gekennzeichnet,**
**daß** der Zusatzabstand (A_{z}) etwa der Strecke (S) multipliziert mit dem Tangens des Neigungswinkels (α) der Windschutzscheibe (4) gegenüber einer Horizontalebene (21) entspricht.

6. Anordnung (1) nach einem der Ansprüche 1 bis 5,
**dadurch gekennzeichnet,**
**daß** eine einteilige oder mehrteilige Abdeckung vorgesehen ist, die mittels einer Abdeckungshalterung (23) im Bereich der Sensorhalterung (5) und der Spiegelhalterung (11) an der Windschutzscheibe (4) befestigt ist und zum Fahrzeuginnenraum (17) hin eine Sichtschutzverkleidung für den Sensor (2) und die Befestigungsteile (12,13) des Innenrückblickspiegels (3) bildet.

7. Anordnung (1) nach Anspruch 6,
**dadurch gekennzeichnet,**
**daß** von der Abdeckungshalterung (23), der Spiegelhalterung (11) und der Sensorhalterung (5) wenigstens zwei zu einer einteiligen oder einstückigen Kombihalterung (22) zusammengefaßt sind.

8. Kombihalterung (22) einer Sensor-Spiegel-Anordnung (1) nach Anspruch 7.

## Claims

1. A sensor/mirror arrangement (1) on a windscreen (4) of a motor vehicle,
- having an optical sensor (2) which is fixed by means of a sensor holder (6) to the windscreen (4) in an upper edge area (7) of the windscreen (4) positioned between a free field of view (6) of the windscreen (4) and a vehicle roof (8) within a wiper field (9) of the windscreen wiper device,
- having an interior rear view mirror (3) which is fixed to the windscreen (4) in the upper edge area (7) between the sensor (2) and the vehicle roof (8),
- the mirror holder (11) having a first fixing part (12) which co-operates with a complementary second fixing part (13) to fix the interior rear view mirror (3) in position and which is fixed to a mirror foot (10) of the interior rear view mirror (3),
- the mirror holder (11) having a base (16) fixed to the windscreen (4) on the side of which facing away from the windscreen (4) is formed the first fixing part and which is dimensioned such that the mirror foot (10) fixed to the mirror holder (11) is positioned a pre-determined distance (Aᵣ) from the windscreen (4) which is greater than a minimum distance (A₀) required for the fitting and/or the operation of the mirror foot (10).

2. An arrangement (1) in accordance with claim 1,
**characterised in that**
the distance (Aᵣ) between the windscreen (4) and the mirror foot (10) is selected such that the interior rear view mirror (3) is located in a position in the passenger compartment (17) in which it has a prescribed angle of view geometry.

3. An arrangement (1) in accordance with claim 1 or 2,
**characterised in that**
- the distance between the mirror foot (10) and the windscreen (4) corresponds to a resulting distance (Aᵣ) formed by the sum of the minimum distance (A₀) and an additional distance (A_{z}),
- the minimum distance (A₀) being present if a predetermined interior rear view mirror (3) is fixed by means of a mirror holder (11') which is not fitted with a base (16) to the windscreen (4) in an initial position in which the interior rear view mirror (3) is located in a position in the passenger compartment (17) in which it has a prescribed angle of vision geometry,
- the resulting distance (Aᵣ) being present if the predetermined interior rear view mirror (2) is fixed by means of the mirror holder (11) fitted with the base (16) to the windscreen (4) in an end position which is offset in relation to the initial position along the windscreen (4) towards the vehicle roof (8) by a section (S) and in which the interior rear view mirror (3) is located in a position in the passenger compartment (17) in which it once again has the prescribed angle of view geometry.

4. An arrangement (1) in accordance with claim 3,
**characterised in that**,
the interior rear view mirror (3) is positioned at approximately the same level (20) in the passenger compartment (17) in the end position as in the initial position.

5. An arrangement (1) in accordance with claim 3 or 4,
**characterised in that**,
the additional distance (A_{z}) corresponds to approximately the section (S) multiplied by the tangent of the angle of inclination (α) of the windscreen (4) in relation to a horizontal plane (21).

6. An arrangement (1) in accordance with one of claims 1 to 5,
**characterised in that**,
a single- or multi-part cover is provided which is fixed to the windscreen (4) by means of a cover holder (23) in the area of the sensor holder (5) and the mirror holder (11) and facing the passenger compartment (17) forms a mask for the sensor (2) and the fixing part s(12, 13) of the interior rear view mirror (3).

7. An arrangement (1) in accordance with claim 6,
**characterised in that**,
at least two of the cover holder (23), the mirror holder (11) and the sensor holder (5) are combined to form a single-part or single-piece combination holder (22).

8. A combination holder (22) of a sensor/mirror arrangement (1) in accordance with claim 7.

## Revendications

1. Dispositif de miroir à capteur (1) sur un pare-brise (4) d'un véhicule,
- pourvu d'un capteur optique (2), qui est fixé au moyen d'un support de capteur (5) dans une zone de bordure supérieure (7) du pare-brise (4) disposée entre un champ de vision libre (6) du pare-brise (4) et un toit de véhicule (8) à l'intérieur d'un champ d'essuyage (9) d'une installation d'essuie-glace sur le pare-brise (4),
- pourvu d'un rétroviseur intérieur (3), qui est fixé au moyen d'un support de rétroviseur (11) dans la zone de bordure supérieure (7) entre le capteur (2) et le toit du véhicule (8) sur le pare-brise (4),
- le support de miroir (11) comportant une première pièce de fixation (12), qui agit en concomitance avec une seconde pièce de fixation complémentaire (13) formée sur le pied du miroir (10) du rétroviseur intérieur (3) pour fixer le rétroviseur intérieur (3),
- le support de miroir (11) comportant un socle (16) fixé au pare-brise (4), sur le côté opposé au pare-brise (4) à partir duquel la première pièce de fixation (12) est formée et dimensionnée de manière à ce que le pied de miroir (10) fixé au support de miroir (11) possède un écart déterminé supérieur à un écart minimal (A₀) nécessaire le cas échéant pour le montage et/ou le fonctionnement du pied du miroir (10) (Aᵣ) par rapport au pare-brise (4).

2. Dispositif (1) selon la revendication 1, **caractérisé en ce que** l'écart (Aᵣ) entre le pare-brise (4) et le pied du miroir (10) est choisi de manière à ce que le rétroviseur intérieur (3) prenne une position dans l'espace à l'intérieur du véhicule (17), dans laquelle il comporte une géométrie de champ oculaire prescrite.

3. Dispositif (1) selon la revendication 1 ou 2, **caractérisé en ce que**
- l'écart du pied du miroir (10) du pare-brise (4) correspond à un écart résultant (Aᵣ), qui est formé par la somme d'un écart minimal (A₀) et d'un écart supplémentaire (A₂),
- l'écart minimal (A₀) existant ainsi, lorsqu'un rétrcviseur intérieur donné (3) est fixé au moyen d'un support de miroir (11'), qui n'est pas équipé d'un socle (16), dans une position de départ sur le pare-brise, dans lequel le rétroviseur intérieur (3) à l'intérieur du véhicule (17) prend une position dans l'espace, dans laquelle il comporte une géométrie de champ oculaire prescrite,
- l'écart résultant (Aᵣ) existant ainsi, lorsque le rétroviseur intérieur donné (3) est fixé au moyen du support de miroir (11) équipé du socle (16) dans une position finale sur le pare-brise (4), qui est décalé par rapport à la position de départ d'une distance (S) le long du pare-brise (4) par rapport au toit du véhicule (8) et dans lequel le rétroviseur intérieur (3) à l'intérieur du véhicule (17) prend une position dans l'espace, dans laquelle il comporte à nouveau la géométrie de champ oculaire prescrite.

4. Dispositif (1) selon la revendication 3, **caractérisé en ce que** le rétroviseur intérieur (3) est disposé environ au même niveau (20) en position finale à l'intérieur du véhicule (17) qu'en position de départ.

5. Dispositif (1) selon la revendication 3 ou 4, **caractérisé en ce que** l'écart supplémentaire (A_{z}) correspond environ à la distance (S) multipliée par la tangente de l'angle d'inclinaison (a) du pare-brise (4) par rapport au niveau horizontal (21).

6. Dispositif (1) selon les revendications 1 à 5, **caractérisé en ce qu'**un revêtement en une ou plusieurs pièces est prévu, revêtement fixé au moyen d'un support de revêtement (23) dans la zone du support de capteur (5) et du support de miroir (11) sur le pare-brise (4) et formant à l'intérieur du véhicule (17) un revêtement de protection de vue pour le capteur (2) et les pièces de fixation (12, 13) du rétroviseur intérieur (3).

7. Dispositif (1) selon la revendication 6, **caractérisé en ce que** le support de revêtement (23), le support de miroir (11) et le support de capteur (5) sont composés d'au moins deux supports combinés en une pièce (22).

8. Support combiné (22) d'un dispositif de miroir à capteur (1) selon la revendication 7.
